(19)

Europäisches Patentamt

European Patent Office

Office européen des brevets

(11) **EP 2 527 913 A1**

(12) **EUROPEAN PATENT APPLICATION**
published in accordance with Art. 153(4) EPC

(43) Date of publication:
**28.11.2012 Bulletin 2012/48**

(21) Application number: **11744537.9**

(22) Date of filing: **07.02.2011**

(51) Int Cl.:
**G02F 1/1335** *(2006.01)*    **G02F 1/1333** *(2006.01)*
**G09F 9/30** *(2006.01)*

(86) International application number:
**PCT/JP2011/052492**

(87) International publication number:
**WO 2011/102250 (25.08.2011 Gazette 2011/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2010 JP 2010036510**

(71) Applicant: **Sharp Kabushiki Kaisha
Osaka-shi, Osaka 545-8522 (JP)**

(72) Inventor: **TAKEUCHI, Noboru
Osaka-shi, Osaka 545-8522 (JP)**

(74) Representative: **Müller - Hoffmann & Partner
Patentanwälte
Innere Wiener Strasse 17
81667 München (DE)**

(54) **DISPLAY DEVICE**

(57)    Provided is an optical-sensor-equipped display device, in which a lens structure for improving a light condensing ratio regarding the condensation of light toward light-receiving elements and widening a dynamic range is realized, without an increase in its thickness. This display device includes a liquid crystal display panel (1) and a backlight unit (2) that irradiates the liquid crystal display panel (1) with light from a back face side thereof. The liquid crystal display panel (1) includes: a plurality of pixel electrodes arranged in a pixel region; pixel-driving elements (10) connected to the pixel electrodes; light-receiving elements (11) provided in the pixel region; an insulation film (15) provided in an upper layer on the light-receiving elements (11) and the pixel-driving elements (10); a flattening film (16) provided in an upper layer on the insulation film (15); and light-condensing lens parts (18) that are embedded in the flattening film (16) above the light-receiving elements (11) and are formed in convex shapes toward the light-receiving elements (11).

FIG. 1

## Description

Technical Field

The present invention relates to a display device provided with light-receiving elements (optical sensors).

Background Art

Recently, display devices having a plurality of pixels, wherein optical sensors are provided in each pixel region, for example, active-matrix-type liquid crystal display devices, have been developed. These display devices can be used as display devices having a touch panel (area sensor) function that is as follows: when a panel surface thereof is touched with, for example, an input pen or a human fingertip, a touched position is detected with use of a light amount detection function of the optical sensors.

As an exemplary conventional display device having optical sensors in a pixel region as described above, a configuration that have a light-condensing lens in order to increase the light use efficiency upon the detection of an object so as to increase the S/N ratio is disclosed in JP2009-139597A.

The conventional configuration disclosed in JP2009-139597A is provided with the light-condensing lens at a position corresponding to an optical sensor region, on a back face (backlight side) of a TFT array substrate thereof. This light-condensing lens brings light from a backlight thereof to a focus in a liquid crystal panel thereof so as to condense the light, and allows the light to reach a front face (observer's side) of the liquid crystal panel. In other words, light that is about to enter the sensor region enters the light-condensing lens before entering the sensor region, and the diameter of the light flux is narrowed in the display section. Therefore, light having entered the display section passes the display section, substantially without a decrease in the light amount, and reaches the observer's side. Thus, this configuration has an advantage of an increase in the backlight use ratio.

However, the above-described configuration includes the light-condensing lens on the back face of the TFT array substrate, and therefore has a problem of an increase in the thickness of the liquid crystal panel.

Disclosure of the Invention

In light of the above-described problem, the following description discloses a lens structure that is capable of improving the backlight use efficiency and that does not increase the thickness of a display device, and an optical-sensor-equipped display device having such a lens structure.

A display device according to one embodiment of the present invention is a display device that includes a display panel and a backlight that irradiates the display panel with light from a back face side of the display panel, wherein the display panel includes: a plurality of pixel electrodes arranged in a pixel region; pixel-driving elements connected to the pixel electrodes; light-receiving elements provided in the pixel region; at least one layer of an insulation film provided in an upper layer on the light-receiving elements and the pixel-driving elements; a flattening film provided in an upper layer on the insulation film; and light-condensing lens parts that are embedded in the flattening film above the light-receiving elements and are formed in convex shapes toward the light-receiving elements.

The above-described configuration allows a display device provided with light-receiving elements to improve the backlight use efficiency, without an increase in the thickness of the device as a whole.

Brief Description of Drawings

[FIG. 1] FIG. 1 is a cross-sectional view showing a schematic configuration of a liquid crystal display device according to one embodiment of the present invention.

[FIG. 2] FIG. 2 is a cross-sectional view showing one step of a method for manufacturing a liquid crystal display panel shown in FIG. 1.

[FIG. 3] FIG. 3 is a cross-sectional view showing one step of the method for manufacturing the liquid crystal display panel shown in FIG. 1.

[FIG. 4] FIG. 4 is a cross-sectional view showing one step of the method for manufacturing the liquid crystal display panel shown in FIG. 1.

[FIG. 5] FIG. 5 is a cross-sectional view showing one step of the method for manufacturing the liquid crystal display panel shown in FIG. 1.

[FIG. 6] FIG. 6 is a cross-sectional view showing one step of the method for manufacturing the liquid crystal display panel shown in FIG. 1.

[FIG. 7] FIG. 7 is a cross-sectional view showing one step of the method for manufacturing the liquid crystal display panel shown in FIG. 1.

[FIG. 8] FIG. 8 is a cross-sectional view showing one step of the method for manufacturing the liquid crystal display panel shown in FIG. 1.

[FIG. 9] FIG. 9 is a cross-sectional view showing one step of the method for manufacturing the liquid crystal display panel shown in FIG. 1.

(FIG. 10] FIG. 10 is a cross-sectional view showing one step of the method for manufacturing the liquid crystal display panel shown in FIG. 1.

(FIG. 11] FIG. 11 is a cross-sectional view showing one step of the method for manufacturing the liquid crystal display panel shown in FIG. 1.

[FIG. 12] FIG. 12 is a cross-sectional view showing one step of the method for manufacturing the liquid crystal display panel shown in FIG. 1.

[FIG. 13] FIG.13 is a cross-sectional view showing one step of the method for manufacturing the liquid crystal display panel shown in FIG. 1.

[FIG. 14] FIG.14 is a cross-sectional view showing one step of the method for manufacturing the liquid crystal display panel shown in FIG. 1.

[FIG. 15] FIG.15 is a cross-sectional view showing one step of the method for manufacturing the liquid crystal display panel shown in FIG. 1.

[FIG. 16] FIG. 16 is a graph showing an effect of the liquid crystal display device according to one embodiment of the present invention.

Embodiments for Carrying Out the Invention

A display device according to one embodiment of the present invention, in a display device including a display panel and a backlight that irradiates the display panel with light from a back face side of the display panel, has a configuration wherein the display panel includes: a plurality of pixel electrodes arranged in a pixel region; pixel-driving elements connected to the pixel electrodes; light-receiving elements provided in the pixel region; at least one layer of an insulation film provided in an upper layer on the light-receiving elements and the pixel-driving elements; a flattening film provided in an upper layer on the insulation film; and light-condensing lens parts that are embedded in the flattening film above the light-receiving elements and are formed in convex shapes toward the light-receiving elements.

With this configuration, in which the light-condensing lens parts formed in convex shapes toward the light-receiving elements are provided above the light-receiving elements, light from the observer's side can be gathered to the light-shielding elements. Therefore, in the case where an object such as a finger touches a surface of the display panel, light that has been emitted from the backlight and is reflected by this object can be gathered to the light-receiving elements. Besides, since the light-condensing lens parts are embedded in the flattening film, no increase occurs to the thickness of the display device due to the provision of the light-condensing lens parts. Thus, since the light condensing ratio regarding the condensation of light toward the light-receiving elements is improved, a display device provided with optical sensor having a wider dynamic range can be realized without an increase in the thickness of the display device.

Further, since the light-condensing lens parts are embedded in the flattening film above the light-receiving elements, an advantage that the light condensing ratio can be improved without an increase in the thickness of the display panel can be achieved. Further, as the light-condensing lens parts are embedded, the flattening film is at least partially removed above the light-receiving elements. Therefore, a phenomenon that fixed charges go along the flattening film and accumulate in the vicinities of the light-receiving elements is suppressed, whereby an advantage of suppressing changes in the characteristics of the light-receiving elements can be achieved.

In the above-described configuration, the light-condensing lens parts can be formed with, for example, a transparent resin material.

In the above-described configuration, the following is preferably satisfied:

$$n1 > n2$$

where n1 represents a refractive index of the light-condensing lens parts, and n2 represents a refractive index of the flattening film. This is intended to improve the light condensing ratio by means of the lens effects. Further, the relationship of n1>1.45 is preferably satisfied. Still further, the relationship of n1>1.8 is further preferably satisfied.

In the above-described configuration, a conductive film made of the same material as that of the pixel electrodes is preferably interposed between the flattening film and the light-condensing lens parts. This is because this conductive film makes it possible to more surely suppress the phenomenon that fixed charges go along the flattening film and accumulate in the vicinities of the light-receiving elements.

In the above-described configuration, light-shielding films are preferably provided on a back face side of the light-receiving elements. The light-shielding films prevent light from the backlight to directly enter the light-receiving elements, and this allows the dynamic range of the light-receiving elements to be improved further.

A method for manufacturing a display device according to one embodiment of the present invention is a method for manufacturing a display device that includes a display panel and a backlight that irradiates the display panel with light from a back face side of the display panel, and the method includes the steps of forming pixel-driving elements and light-receiving elements in a pixel region of the display panel; forming at least one layer of an insulation film in an upper layer on the light-receiving elements and the pixel-driving elements; forming a flattening film in an upper layer on the insulation film; forming pixel electrodes connected to the pixel-driving elements, in an upper layer on the flattening film; and forming light-condensing lens parts above the light-receiving elements, the light-condensing lens parts being embedded in the flattening film and formed in convex shapes toward the light-receiving elements.

With this manufacturing method, as the light-condensing lens parts formed in convex shapes toward the light-receiving elements are formed above the light-receiving elements, light from the observer's side can be gathered to the light-shielding elements. Besides, since the light-condensing lens parts are embedded in the flattening film, no increase occurs to the thickness of the display device due to the provision of the light-condensing lens parts. Thus, since the light condensing ratio regarding the condensation of light toward the light-receiving elements is improved, a display device provided with optical sensors having a wider dynamic range can be realized without an increase in the thickness of the display device.

Preferably, the above-described method further includes the step of forming recesses in the flattening film before the step of forming the pixel electrodes, wherein the step of forming the light-condensing lens parts includes the sub-steps of depositing a lens material for forming the light-condensing lens parts in the recesses in the flattening film; and removing portions of the lens material that are present outside the recesses, among the lens material deposited in the recesses.

Detailed Embodiment

The following description explains a detailed embodiment of the present invention in detail based on the drawings. It should be noted that the drawings referred to below show a principal configuration of an embodiment of the present invention, in which illustration of some members is omitted. The drawings referred to below do not necessarily show dimensional ratios of respective members faithfully.

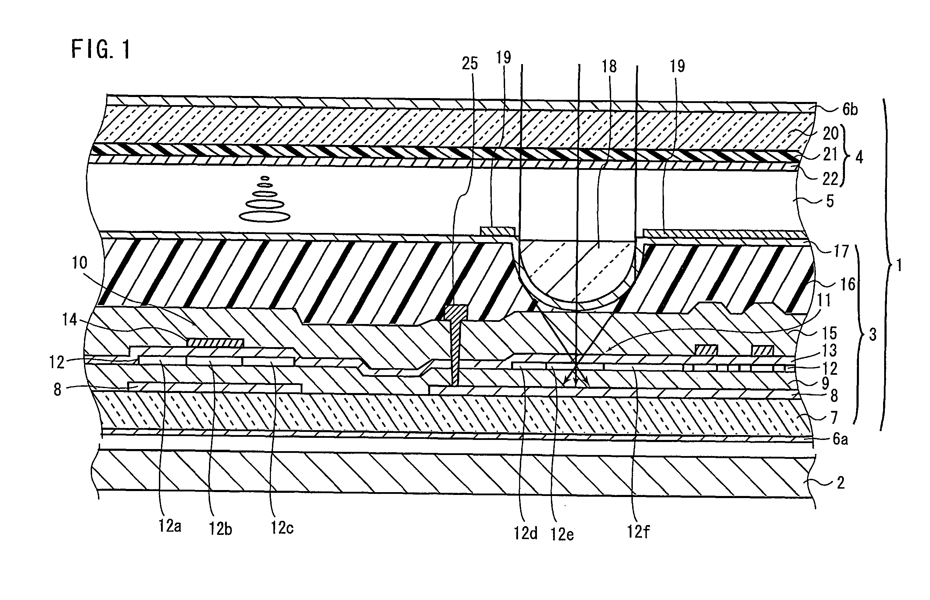

FIG. 1 is a cross-sectional view showing a schematic configuration of a liquid crystal display device according to the present embodiment. The liquid crystal display device shown in FIG. 1 includes a liquid crystal display panel 1, and a backlight unit 2 provided on a back face of the liquid crystal display panel 1. It should be noted that the "back face" referred to herein is a face that comes on a back side in the case where a side on which a screen of the liquid crystal display device is observed is referred to as a "front face".

The liquid crystal display panel 1 includes an active matrix substrate 3 and a counter substrate 4. Liquid crystal 5 is sealed between the active matrix substrate 3 and the counter substrate 4, with use of sealing members (not shown). On the front face side and the back face side of the liquid crystal display panel 1, polarizing plates 6a and 6b are provided, respectively.

The active matrix substrate 3 has a glass substrate 7. In an upper layer on the glass substrate 7, light-shielding films 8 and a basecoat film 9 are laminated in this order. Here, the "upper layer" referred to herein is a layer positioned on an upper side in the cross-sectional view of FIG. 1.

In an upper layer on the basecoat film 9, pixel-driving elements 10 and light-receiving elements 11 are formed. The pixel-driving elements 10 are so-called TFTs (thin film transistors). Each of the pixel-driving elements 10 of the present embodiment has a gate electrode 14, a P-type channel region 12b formed below the gate electrode 14 via a first insulation film 13, as well as a source region 12a and a drain region 12c formed on both sides of the P-type channel region 12b. The light-receiving element 11 according to the present embodiment is a so-called lateral PIN diode. The light-receiving element 11 has a P-layer 12d and an N-layer 12f on both sides of an I-layer 12e, respectively. The I-layer 12e is an intrinsic semiconductor layer, or a semiconductor layer having a relatively low impurity concentration. The P-layer 12d is a semiconductor layer having a relatively high P-type impurity concentration. The N-layer 12f is a semiconductor layer having a relatively high N-type impurity concentration.

The pixel-driving elements 10 are provided at the pixels, respectively, at one-to-one correspondence. The light-receiving elements 10 are not necessarily provided at all the pixels, and may be provided at pixels where the light-receiving elements 10 are required, depending on the resolution required for the detection of a touched position.

A second insulation film 15 is provided so as to cover an entirety of the pixel-driving elements 10, the light-receiving elements 11, and the first insulation film 13. Further, a flattening film 16 is provided so as to cover an entirety of the second insulation film 15. The flattening film 16 is formed so as to have a flattened surface, with recesses above the light-receiving elements 11.

On the flattening film 16, a transparent electrode film 17 is provided. The transparent electrode film 17 is patterned so as to correspond to the pixels in a region where the pixel-driving elements 10 are formed, and the patterns thus formed of the transparent electrode film 17 are electrically connected to the drain regions 12c of the pixel-driving elements 10, respectively, so as to function as pixel electrodes. In each region where the light-receiving element 11 is formed, the transparent electrode film 17 gets in the recess in the flattening film 16. In each recess in the flattening film 16, a light-condensing lens part 18 is formed with a transparent resin. In other words, in each recess in the flattening film 16, the transparent electrode film 17 is interposed between the light-condensing lens part 18 and the flattening film 16.

The light-condensing lens part 18 is circular as viewed in the normal direction of the active matrix substrate 3. In other words, the light-condensing lens part 18 is formed in a planoconvex lens shape. The light-condensing lens part 18, however, may be formed in a cylindrical lens shape so as to cover a plurality of the light-receiving elements 11 arrayed in a line on the active matrix substrate 3. In this case, the light-condensing lens part 18 is viewed in a long rectangular shape when viewed in the normal direction of the active matrix substrate 3.

It should be noted that a bottom of each recess of the flattening film 16 where the light-condensing lens part 18 is formed reaches the second insulation film 15, in the example shown in FIG. 1. The configuration, however, may be such that the bottom of each recess in the flattening film 16 does not reach the second insulation film 15. It should be noted that in the case where there is completely no flattening film 16 above the light-receiving element 11 as shown in FIG. 1, it is unlikely that a phenomenon that fixed charges go along the flattening film 16 and accumulate in the vicinities of a photodiode would occur. Therefore, this configuration is preferable so as to improve the reliability of the light-receiving elements 11.

Further, in the example shown in FIG. 1, each light-condensing lens part 18 is substantially semi-circular as viewed in the cross-sectional view shown in FIG. 1. However, the shape of the light-condensing lens part 18 is not limited to this, and may be in any other shape as long as it has a function of gathering light entering the light-condensing lens part 18 from the observer's side toward the I-layer 12e of the light-receiving element 11. It should be noted that a light incidence surface of the light-condensing lens part 18 preferably has a larger area, in such a range that it does not adversely affect the pixel-driving elements 10 and lines of various types in the vicinities of the light-receiving elements 11. This is because with a higher light condensing ratio of the light-condensing lens parts 18, the dynamic range of the outputs of the light-receiving elements 11 improves further.

The transparent resin that forms the light-condensing lens parts 18 is selected from materials that satisfy the requirement that the transparent resin has a relative refractive index of 1 or more with respect to materials around the same. In other words, let the refractive index of the transparent resin of the light-condensing lens parts 18 be n1 and let the refractive index of the flattening film 16 be n2, and the following is satisfied:

$$n1 > n2$$

For example, in the case where the flattening film 16 has a refractive index n2 of about 1.45, the refractive index n1 is preferably greater than 1.45. Besides, since the light condensing effect increases as the relative refractive index is greater, it is further preferable that the refractive index n1 is greater than 1.8. It should be noted that since the transparent electrode film 17 generally has a thickness of about 30 nm to 100 nm, which is very thin, influences of the refractive index of the transparent electrode film 17 can be ignored.

In the configuration shown in FIG. 1, reflection electrodes 19 are formed on a surface of the transparent electrode film 17, in areas other than pixel apertures and the light-condensing lens parts 18. On surfaces of the transparent electrode film 17, the light-condensing lens parts 18, and the reflection electrodes 19, an alignment film (not shown) is provided.

On the other hand, the counter substrate 4 includes a glass substrate 20, a color filter 21 provided on a surface of the glass substrate 20, a counter electrode 22 provided so as to cover an entire surface of the color filter 21, and an alignment film (not shown). In the color filter 21, there are regularly arranged filter regions of, for example, three principal colors of red, green, and blue, and a black matrix for blocking leak light and the like from areas other than the pixel regions.

The following description explains a method for manufacturing the liquid crystal display device having the above-described configuration.

First, a method for manufacturing the active matrix substrate 3 is explained.

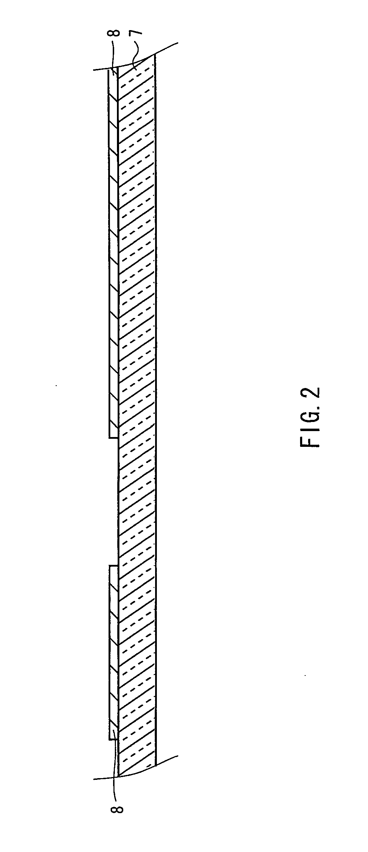

First, as shown in FIG. 2, for example, films of a metal having a light blocking property are formed on the surface of the glass substrate 7 by sputtering or the like, whereby the light shielding films 8 are formed. The light shielding films 8 are provided below portions where the pixel-driving elements 10 and the light-receiving elements 11 are to be formed later. In other words, the light shielding films 8 prevent direct light from the backlight unit 2 from becoming incident on the pixel-driving elements 10 and the light-receiving elements 11. With this, the deterioration of element characteristics of the pixel-driving elements 10 is suppressed. Besides, with this, the S/N ratio of outputs from the light-receiving elements 11 is improved. However, the light shielding films 8 below the pixel-driving elements 10 are not indispensable.

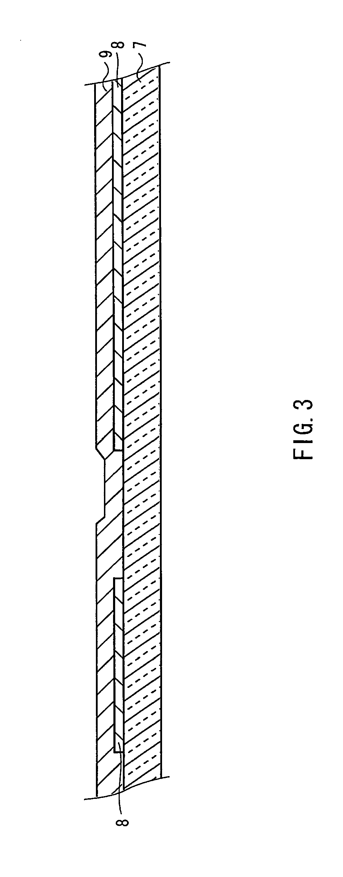

Next, as shown in FIG. 3, the basecoat film 9 is formed so as to cover entire surfaces of the light shielding films 8 and the glass substrate 7. As the basecoat film 9, the following film can be used: a silicon oxide film; a silicon nitride film; a film made of an insulative inorganic substance such as a silicon nitride oxide film; or a lamination film made of an appropriate combination of these. These films can be formed by deposition by LPCVD, plasma CVD, sputtering, or the like. In the present embodiment, a silicon oxide film is used as the basecoat film 9.

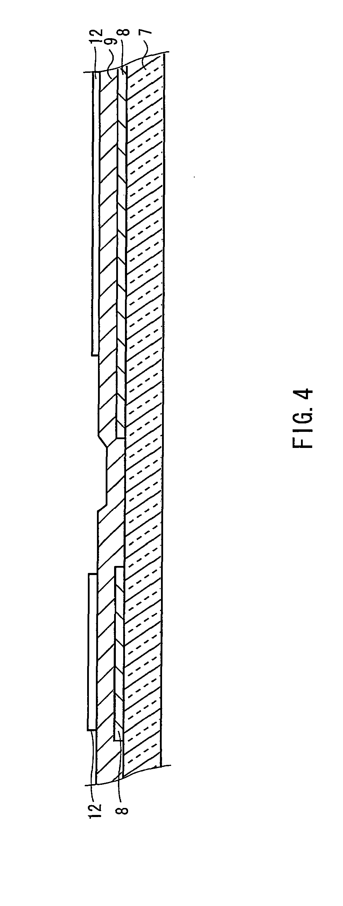

Next, on a surface of the basecoat film 9, a non-monocrystalline semiconductor thin film that is to become a polycrystalline semiconductor film 12 later is formed by, for example, LPCVD, plasma CVD, or sputtering. It should be noted that to form the non-monocrystalline semiconductor thin film, the following can be used: amorphous silicon; polycrystalline silicon; amorphous germanium; polycrystalline germanium; amorphous silicon-germanium; polycrystalline silicon-germanium; amorphous silicon-carbide; or polycrystalline silicon-carbide. In the present embodiment, amorphous silicon is used. Then, by crystallizing the non-monocrystalline semiconductor thin film, the polycrystalline semiconductor film 12 is formed, as shown in FIG. 4. Upon the crystallization, a laser beam or an electronic beam can be used. Further, the polycrystalline semiconductor film 12 is patterned by photolithography in accordance with regions where the pixel-driving elements 10 and the light-receiving elements 11 are to be formed.

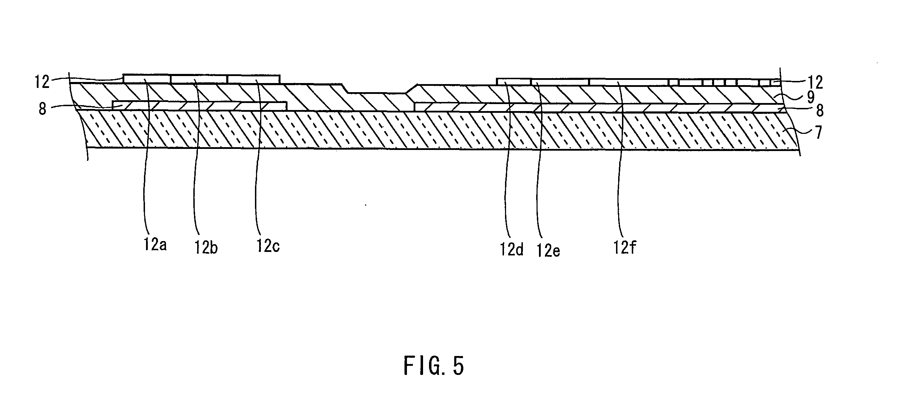

Next, as shown in FIG. 5, in a center portion of each region where the pixel-driving element 10 is to be formed in the polycrystalline semiconductor film 12, the P-type channel region 12b is formed by, for example, impurity doping by ion implantation or the like. On both sides of the P-type channel region 12b, the N-type source region 12a and the N-type drain region 12c are formed, respectively. On the other hand, in a center portion of each region where the light-receiving element 11 is to be formed in the polycrystalline semiconductor film 12, the I-layer 12e as an intrinsic semiconductor layer or a semiconductor layer having a relatively low impurity concentration is formed. On both sides of the I-layer 12e, the P-layer 12d as a semiconductor layer having a relatively high P-type impurity concentration, and the N-layer 12f as a semiconductor layer having a relatively high N-type impurity concentration are formed, respectively.

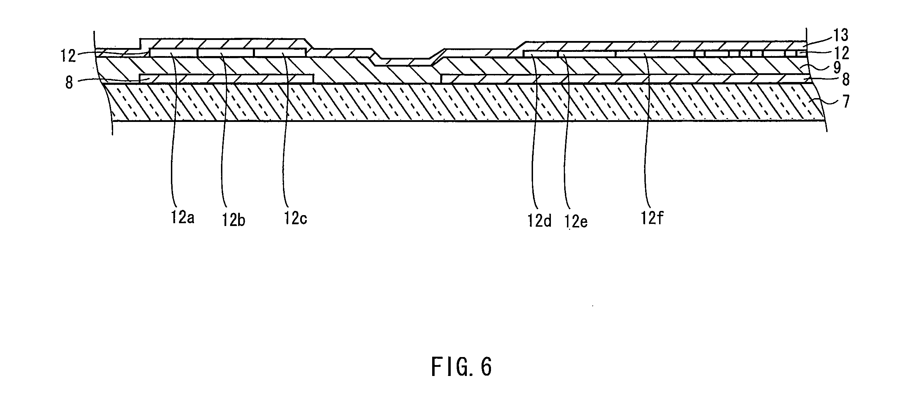

Next, as shown in FIG. 6, the first insulation film 13 formed with, for example, a silicon oxide film, is formed so as to cover entire surfaces of the polycrystalline semiconductor films 8 and the basecoat film 9. This first insulation film 13 works as a gate insulation film in the pixel-driving element 10. It should be noted that the first insulation film 13 is formed also in regions where the light-receiving elements 11 are to be formed in the present embodiment, but the first insulation film 13 may be formed only in the regions of the pixel-driving elements 10.

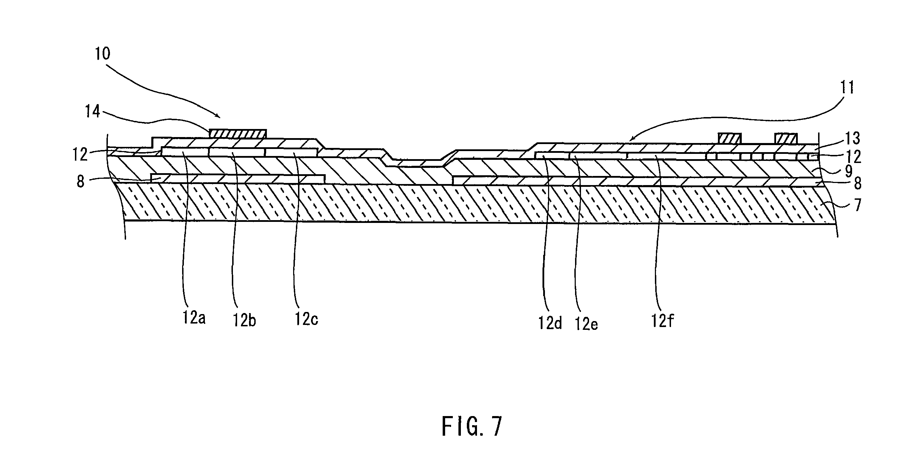

Next, as shown in FIG. 7, on the surface of the first insulation film 13, the gate electrodes 14 are formed at positions where the pixel-driving elements 10 are to be formed. The gate electrodes 14 are formed, for example, by the following method. First, for example, a TaN (tantalum nitride) film and a W (tungsten) film are laminated so as to form a two-layer conductive film. It should be noted that materials for the conductive film are not limited to those mentioned above. The conductive film may be formed with the following: an element selected from Ta (tantalum), W (tungsten), Ti (titanium), Mo (molybdenum), Al (aluminum), Cu (copper), Cr (chromium), and Nd (neodyminum); or an alloy material or a chemical compound material containing any of the above-mentioned elements as a principal component. Alternatively, the above-mentioned conductive film may be formed with a semiconductor film typified by a polycrystalline silicon film doped with an impurity such as P (phosphorus) or B (boron). The conductive film is patterned by etching, whereby the gate electrodes 14 are formed.

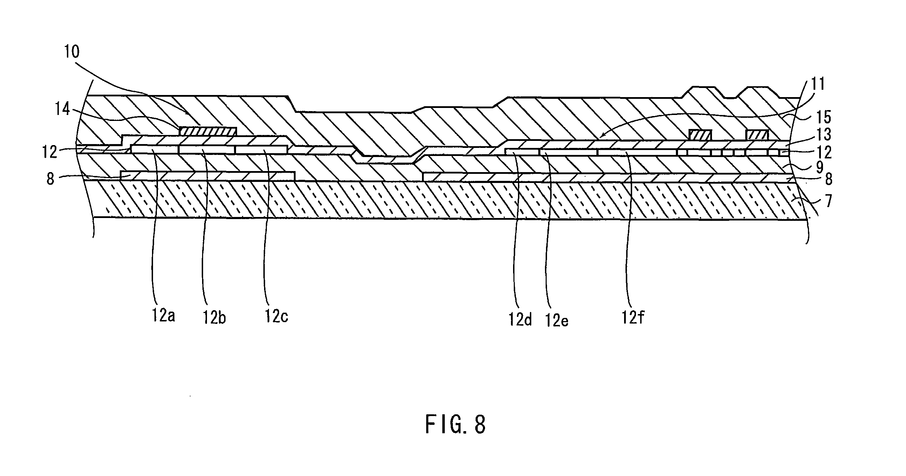

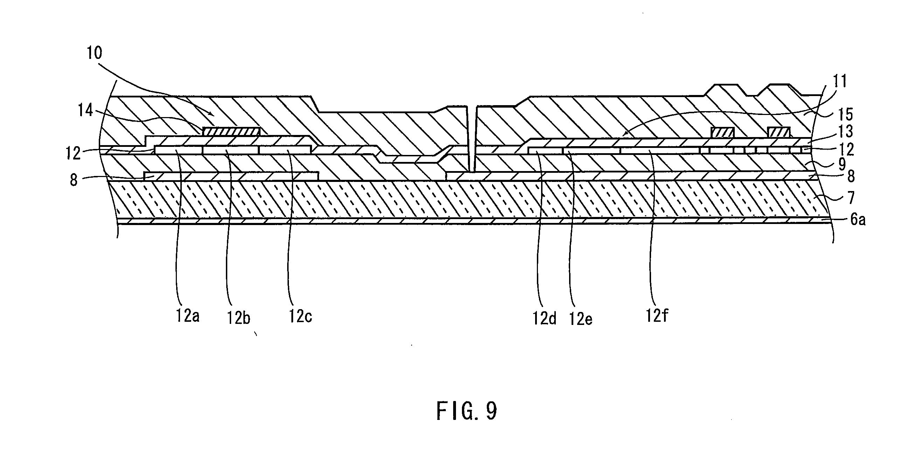

Next, as shown in FIG. 8, the second insulation film 15 is formed by deposition, which is formed with, for example, a silicon oxide film, so as to cover the gate electrodes 14 and the first insulation film 13. Subsequently, contact holes (not shown in the cross-sectional view of FIG. 1) that go through the second insulation film 15 and the first insulation film 13 are formed above the source regions 12a and the drain regions 12c of the pixel-driving elements 10, and the P-layers 12d and the N-layers 12f of the light-receiving elements 11. In the present embodiment, contact holes that go through the second insulation film 15, the first insulation film 13, and the basecoat film 9 are also formed, as shown in FIG. 9.

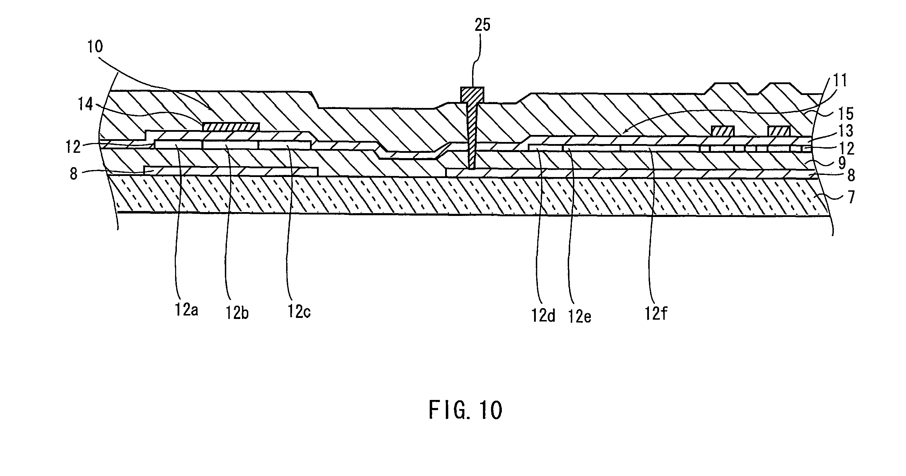

Next, metal electrodes that go through these contact holes are formed by the following method. First, a conductive film is formed over an entire surface of the second insulation film 15, by sputtering or the like. This conductive film also goes into the inside of each aforementioned contact holes. As the material for the conductive film, the following material can be used: an element selected from Ta, W, Ti, Mo, Al, Cu, Cr, Nd and the like; an alloy material or a chemical compound material containing the aforementioned element as a principal component. The conductive film may be formed in a lamination structure in which thin films made of such elements are appropriately combined as required. In the present embodiment, aluminum is used. The above-described conductive film is patterned into a desired pattern by etching by photolithography, thereby becoming metal electrodes (i.e., source electrodes and drain electrodes) connected with the source regions 12a and the drain regions 12c of the pixel-driving elements 10, respectively, as well as becoming metal electrodes connected electrically with the P-layers 12d and the N-layers 12f of the light-receiving elements 11. It should be noted that these metal electrodes do not appear on the cross section shown in FIG. 1. At the same time, metal electrodes 25 to be connected to the light-shielding films 8 for the light-receiving elements 11 are formed also, as shown in FIG. 10. It should be noted that the metal electrodes 25 are used for supplying a constant voltage to the light-shielding films 8 for, for example, the purpose of improving element characteristics of the light-receiving elements 11, and the like, but they are not indispensable. Lines from these metal electrodes are formed also by patterning the above-described conductive films as required.

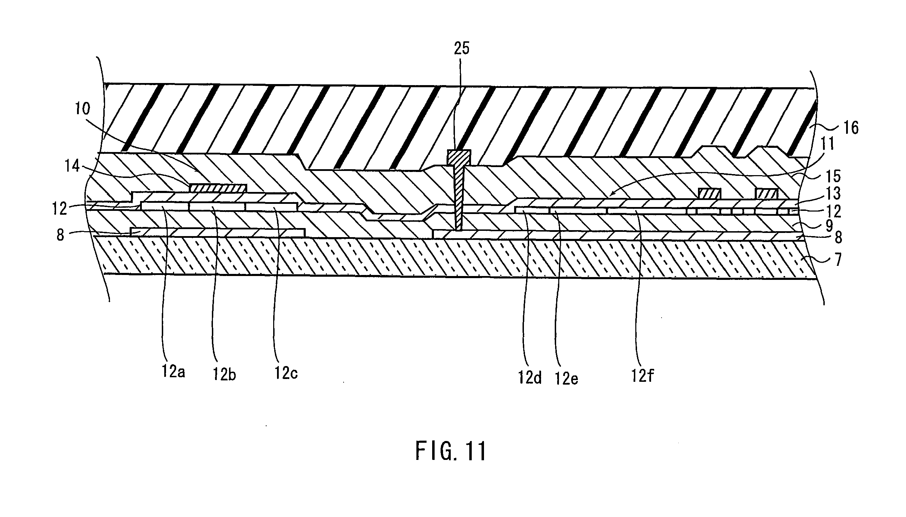

Next, as shown in FIG. 11, the flattening film 16 is formed by spin coating, slit coating, or the like, with a transparent organic resin having a small dielectric constant, so as to cover the second insulation film 15, the metal electrodes and lines described above. It should be noted that an acrylic resin is used as the material for the flattening film 16 in the present embodiment. An inorganic substance, for example, siloxane polymer, may be contained in the flattening film 16, as long as the flattening film 16 can be formed thick without clacks or the like.

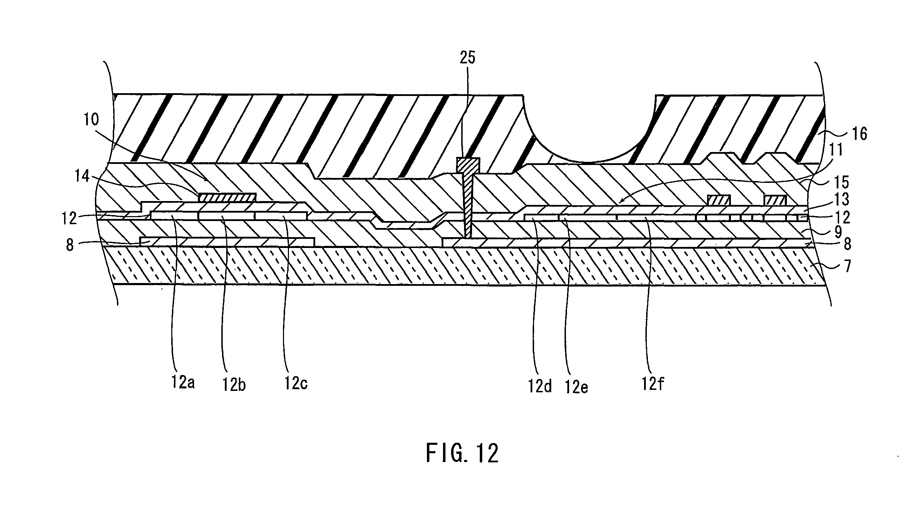

Next, via holes (not shown) that pass through the flattening film 16 are formed above the drain electrodes (not shown in the cross-sectional view of FIG. 1) of the pixel-driving elements 10. The via holes can be formed by exposing and developing processes in the case where the material for the flattening film 16 is a photosensitive resin; alternatively, they can be formed by, for example, dry etching in the case where the material for the flattening film 16 is a non-photosensitive resin. At the same time when the via holes are formed, recesses in which the light-condensing lens parts 18 are to be embedded are formed in the flattening film 16, as shown in FIG. 12. It should be noted that the recesses in which the light-condensing lens parts 18 are to be embedded and the via holes have different dimensions, and therefore, in the case where the accuracy is important, these may be formed through separate photo processing steps.

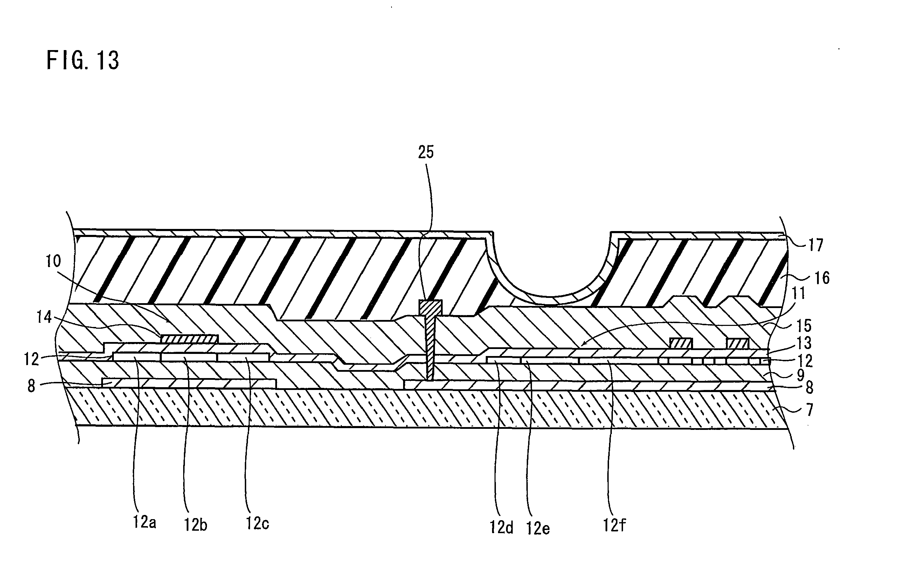

Next, as shown in FIG. 13, the transparent conductive film 17 made of ITO (indium tin oxide), IZO (indium zinc oxide), or the like is formed by sputtering or the like on the flattening film 16, and is patterned into a desired pattern with use of a photoresist. With this transparent electrode film 17, pixel electrodes are formed so as to be connected to the pixel-driving elements 10. Further, in the regions where the light-receiving elements 11 are formed, the transparent electrode film 17 also goes into the recesses in the flattening film 16.

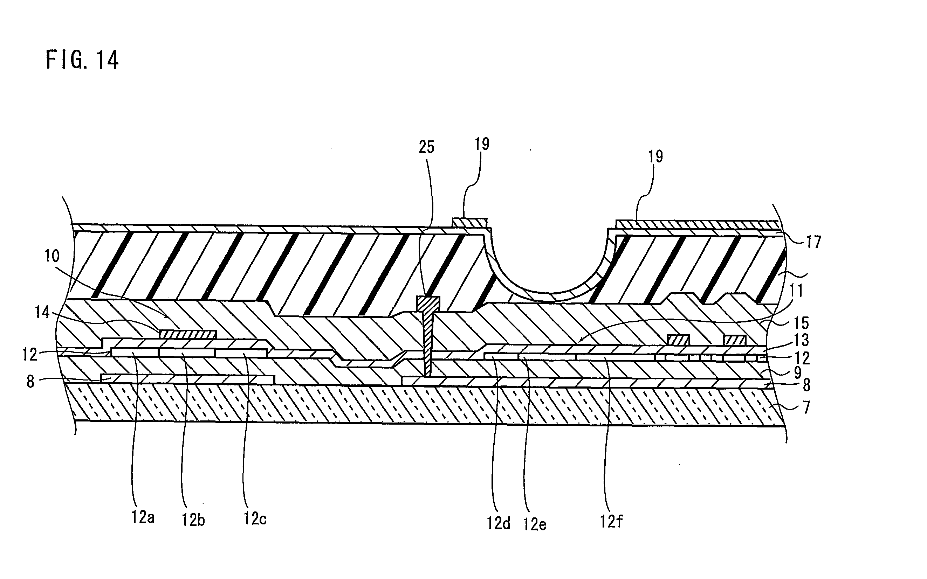

Subsequently, as shown in FIG. 14, at portions of the transparent electrode film 17 where the light-receiving elements 11 are formed, a metal thin film is formed by deposition and is patterned as required, whereby reflection electrodes 19 are formed.

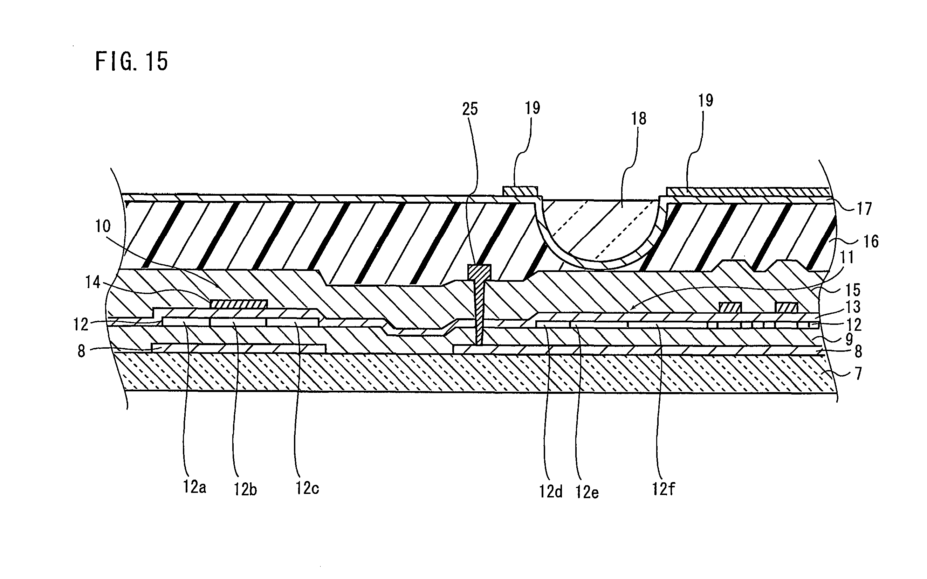

Next, as shown in FIG. 15, in the recesses in the flattening film 16, the light-condensing lens parts 18 made of a transparent resin are formed by the following method. First, a transparent lens material having a high refractive index is deposited on the reflection electrodes 19 and the transparent electrode film 17, as well as on the flattening film 16. Then, the deposition film is set back by ashing or the like, whereby the light-condensing lens parts 18 are formed in a state of being embedded in the recesses in the flattening film 16. Here, "the deposition film is set back" means that portions of the deposition film that are present outside the recesses in the flattening film 16 are removed. It should be noted that TiO (titanium oxide)-dispersed polyimide, a TiO (titanium oxide)-mixed resin polymer, or the like can be used as the transparent lens material.

Next, an alignment film (not shown) is formed over an entire surface, whereby the active matrix substrate 3 is completed.

This active matrix substrate 3 and the counter substrate 4 formed in a known method are bonded with a sealing material being interposed therebetween, the liquid crystal 5 is sealed therebetween, and the polarizing plates 6a and 6b are arranged on both surfaces. Thus, the liquid crystal display panel 1 shown in FIG. 1 is completed. It should be noted that the liquid crystal 5 can be injected into between the substrates, by using capillarity, after the substrates are bonded. Alternatively, the following method may be adopted: before the substrates are bonded, the liquid crystal 5 is dropped onto one of the substrates.

The liquid crystal display panel 1 according to the present embodiment can be manufactured by the above-described manufacturing method.

In the liquid crystal display device according to the present embodiment, the light-condensing lens parts 18 for gathering light toward the light-receiving elements 11 are embedded in the flattening film 16 above the light-receiving elements 11, whereby the light condensing ratio regarding the ratio of gathering light toward the light-receiving elements 11 can be improved. As a result, a display device having optical sensors with a wider dynamic range can be realized.

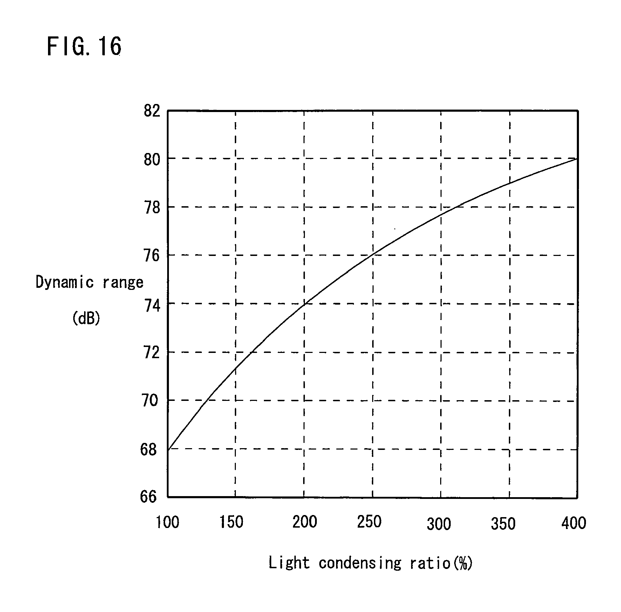

For example, FIG. 16 is a graph showing how the dynamic range is improved by the light condensing effect of the light-condensing lens parts 18 in the liquid crystal display device according to the present embodiment in the case where the S/N ratio of outputs of the light-receiving elements 11 is 2500 without the light-condensing lens parts 18. It should be noted that the "light condensing ratio" shown in FIG. 16 is a value by assuming the light condensing ratio when no light-condensing lens part 18 is provided as 100 %. It is clear from FIG. 16 that as the light condensing ratio by the light-condensing lens parts 18 increases, the dynamic range is widened.

Further, according to the configuration of the present embodiment, the flattening film 16 is removed so as to have recesses above the light-receiving elements 11, so that the light-condensing lens parts 18 are embedded therein. This provides an advantage of improvement of the reliability of the light-receiving elements 11. More specifically, in the case where the flattening film 16 is present above the light-receiving elements 11, fixed charges go along the flattening film 16 and are accumulated in the vicinities of photodiodes, whereby diode characteristics change in some cases. With the configuration of the present embodiment, in which the flattening film 16 is removed above the light-receiving elements 11, the problem due to the fixed charge accumulation does not occur.

Further, with the configuration in which the transparent conductive film 17 is interposed between the light-condensing lens parts 18 and the flattening film 16 as shown in FIG. 1, the characteristic deterioration of the light-receiving elements due to the above-described fixed charge accumulation can be prevented more effectively.

The above-described specific embodiment is merely an example for embodying the present invention. The technical scope of the present invention is not limited to the above-described embodiment, and various modifications of the present invention are available.

For example, the light-receiving elements may be anything as long as they output electric currents according to amounts of received light, though the configuration in which those having PIN diodes are provided as the light-receiving elements is shown in the foregoing description of the embodiment. Other examples of the light-receiving elements are, for example, CCDs, CMOSs, PN diodes, and phototransistors.

In the present embodiment, the glass substrates are used as the base substrates for the active matrix substrate 3 and the counter substrate 4, but quartz substrates, plastic substrates, or the like can be used instead.

Further, in the description of the present embodiment, the configuration in which TFTs of the staggered structure (top-gate type) are used as pixel-driving elements is shown as an example, but a configuration in which TFTs of the inverse staggered structure (bottom-gate type) are used as pixel-driving elements may be used instead.

Industrial Applicability

The present invention is industrially applicable as a display device.

**Claims**

1. A display device comprising a display panel and a backlight that irradiates the display panel with light from a back face side of the display panel, wherein the display panel includes:

   a plurality of pixel electrodes arranged in a pixel region;
   pixel-driving elements connected to the pixel electrodes;
   light-receiving elements provided in the pixel region;
   at least one layer of an insulation film provided in an upper layer on the light-receiving elements and the pixel-driving elements;
   a flattening film provided in an upper layer on the insulation film; and
   light-condensing lens parts that are embedded in the flattening film above the light-receiving elements and are formed in convex shapes toward the light-receiving elements.

2. The display device according to claim 1, wherein the light-condensing lens parts are formed with a transparent resin.

3. The display device according to claim 1 or 2, wherein the following is satisfied:

$$n1 > n2$$

   where n1 represents a refractive index of the light-condensing lens parts, and n2 represents a refractive index of the flattening film.

4. The display device according to any one of claims 1 to 3, wherein the following is satisfied:

$$n1 > 1.45$$

   where n1 represents a refractive index of the light-condensing lens parts.

5. The display device according to claim 4 the following is satisfied:

$$n1 > 1.8$$

   where n1 represents a refractive index of the light-condensing lens parts.

6. The display device according to any one of claims 1 to 5, wherein a conductive film made of the same material as that of the pixel electrodes is interposed between the flattening film and the light-condensing lens parts.

7. The display device according to any one of claims 1 to 6, wherein light-shielding films are provided on a back face side of the light-receiving elements.

8. A method for manufacturing a display device that includes a display panel and a backlight that irradiates the display panel with light from a back face side of the display panel, the method comprising the steps of:

   forming pixel-driving elements and light-receiving elements in a pixel region of the display panel;
   forming at least one layer of an insulation film in an upper layer on the light-receiving elements and the pixel-driving elements;
   forming a flattening film in an upper layer on the insulation film;
   forming pixel electrodes connected to the pixel-driving elements, in an upper layer on the flattening film; and
   forming light-condensing lens parts above the light-receiving elements, the light-condensing lens parts being embedded in the flattening film and formed in convex shapes toward the light-receiving elements.

9. The method for manufacturing a display device according to claim 8, further comprising the step of forming recesses in the flattening film before the step of forming the pixel electrodes, wherein the step of forming the light-condensing lens parts includes the sub-steps of:

   depositing a lens material for forming the light-condensing lens parts in the recesses in the flattening film; and
   removing portions of the lens material that are present outside the recesses, among the lens material deposited in the recesses.

FIG. 1

8 — 8

7

## FIG. 2

FIG. 3

FIG. 4

EP 2 527 913 A1

FIG. 5

FIG. 6

EP 2 527 913 A1

FIG. 7

FIG. 8

FIG. 9

FIG. 10

FIG. 11

FIG. 12

EP 2 527 913 A1

FIG. 13

FIG. 14

FIG. 15

EP 2 527 913 A1

FIG. 16

## INTERNATIONAL SEARCH REPORT

| International application No. |
|---|
| PCT/JP2011/052492 |

A. CLASSIFICATION OF SUBJECT MATTER
*G02F1/1335*(2006.01)i, *G02F1/1333*(2006.01)i, *G09F9/30*(2006.01)i

According to International Patent Classification (IPC) or to both national classification and IPC

B. FIELDS SEARCHED

Minimum documentation searched (classification system followed by classification symbols)
G02F1/1335, G02F1/1333, G09F9/30

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-209563 A (Seiko Epson Corp.), 11 September 2008 (11.09.2008), entire text; fig. 1 to 8 (Family: none) | 1-9 |
| A | JP 2000-330090 A (Zaidan Hojin Industrial Technology Research Institute), 30 November 2000 (30.11.2000), entire text; fig. 1 to 3 (Family: none) | 1-9 |
| A | JP 2003-114310 A (Seiko Epson Corp.), 18 April 2003 (18.04.2003), paragraph [0051]; fig. 4 (Family: none) | 1-9 |

☐ Further documents are listed in the continuation of Box C.   ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 19 April, 2011 (19.04.11) | Date of mailing of the international search report <br> 26 April, 2011 (26.04.11) |
|---|---|
| Name and mailing address of the ISA/ <br> Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009139597 A